(19) Europäisches Patentamt
European Patent Office
Office européen des brevets

(11) **EP 3 381 976 B1**

(12) **EUROPEAN PATENT SPECIFICATION**

(45) Date of publication and mention
of the grant of the patent:
**26.01.2022 Bulletin 2022/04**

(21) Application number: **16868380.3**

(22) Date of filing: **09.11.2016**

(51) International Patent Classification (IPC):
**C08J 9/18** *(2006.01)*　　**C08J 9/00** *(2006.01)*
**C08J 9/12** *(2006.01)*　　**C08J 9/232** *(2006.01)*

(52) Cooperative Patent Classification (CPC):
**C08J 9/18; C08J 9/0061; C08J 9/122; C08J 9/232;**
C08J 2203/06; C08J 2205/052; C08J 2323/12;
C08J 2423/06

(86) International application number:
**PCT/JP2016/083280**

(87) International publication number:
**WO 2017/090432 (01.06.2017 Gazette 2017/22)**

(54) **METHOD FOR PRODUCING POLYPROPYLENE-BASED RESIN FOAMED PARTICLES, POLYPROPYLENE-BASED RESIN FOAMED PARTICLES, AND IN-MOLD FOAM MOLDED ARTICLE**

VERFAHREN ZUR HERSTELLUNG VON HARZSCHAUMTEILCHEN AUF POLYPROPYLENBASIS, HARZSCHAUMTEILCHEN AUF POLYPROPYLENBASIS UND HINTERSPRITZTER SCHAUMFORMGEGENSTAND

PARTICULES EXPANSÉES DE RÉSINE DE POLYPROPYLÈNE AINSI QUE PROCÉDÉ DE FABRICATION DE CELLES-CI, ET CORPS MOULÉ PAR EXPANSION DANS UNE MATRICE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.11.2015 JP 2015230292**

(43) Date of publication of application:
**03.10.2018 Bulletin 2018/40**

(73) Proprietor: **Kaneka Corporation**
**Osaka-shi, Osaka 530-8288 (JP)**

(72) Inventors:
• **SATO, Keishi**
**Settsu-shi**
**Osaka 566-0072 (JP)**
• **FUKUZAWA, Jun**
**Osaka-shi**
**Osaka 530-8288 (JP)**

(74) Representative: **Vossius & Partner**
**Patentanwälte Rechtsanwälte mbB**
**Siebertstrasse 3**
**81675 München (DE)**

(56) References cited:
**EP-A1- 2 221 337**　　**EP-A1- 2 508 555**
**WO-A1-2009/047998**　　**WO-A1-2014/136933**
**WO-A1-2015/098619**　　**JP-A- 2008 255 286**
**JP-A- 2010 265 449**　　**US-A1- 2009 176 902**

Remarks:
The file contains technical information submitted after the application was filed and not included in this specification

EP 3 381 976 B1

## Description

Technical Field

The present invention relates to a method for producing expanded polypropylene resin particles. More specifically, the present invention relates to a method for producing expanded polypropylene resin particles that provide a lightweight, high-strength in-mold expanded molded product. The present invention also relates to expanded polypropylene resin particles and an in-mold expanded molded product.

Background Art

Polypropylene resin in-mold expanded molded products, which are obtained by filling expanded polypropylene resin particles into a mold and heating them with steam to allow them to fuse together, are lightweight and shock-absorbing (these properties are characteristic to expanded products) and can be freely molded and formed into desired shapes, and thus have been used in various applications such as returnable containers and shock absorbing mats. The polypropylene resin in-mold expanded molded products are, when compared with in-mold expanded molded products made of polystyrene resin and polyethylene resin, highly heat resistant and thus less prone to changes in shape and physical properties even in high temperature conditions. Therefore, the polypropylene resin in-mold expanded molded products are positively used also in automotive components that are required to have high level physical properties and high quality under harsh conditions. In recent years, polypropylene resin in-mold expanded molded products for use as automotive components have been required to be more lightweight, mainly for the purpose of, for example, reducing material cost and improving fuel efficiency. Each material is required to have a certain level of strength, and needs to satisfy that level of strength. That is, for weight reduction of a material, not only a technique of causing resin to expand to a greater extent but also a technique of improving strength of an in-mold expanded molded product is needed.

Generally, the strength of a polypropylene resin in-mold expanded molded product is evaluated based on compressive strength. Specifically, when an in-mold expanded molded product is compressed by application of stress to deform, a smaller degree of deformation of the in-mold expanded molded product means a higher strength of that in-mold expanded molded product. The compressive strength of an in-mold expanded molded product is usually proportional to the strength of a polypropylene resin (base material), provided that the compressive strength is compared between in-mold expanded molded products having the same density. That is, in a case where a polypropylene resin (B) has a higher strength than a polypropylene resin (A), an in-mold expanded molded product (B') made of the polypropylene resin (B) has a higher compressive strength than an in-mold expanded molded product (A') which is made of the polypropylene resin (A) and which has the same density as the in-mold expanded molded product (B'). The strength of a polypropylene resin is generally evaluated using a flexural modulus as an indicator. Therefore, for the purpose of improving the strength of an in-mold expanded molded product, a polypropylene resin having a high flexural modulus is used.

Meanwhile, the inventors have tried to increase expansion ratio (to reduce weight) of an in-mold expanded molded product and increase the strength of the in-mold expanded molded product by using, as a base, a "pressure-release expansion" process in which an inorganic foaming agent such as carbon dioxide gas is used as a foaming agent. Carbon dioxide gas has conventionally been selected for its small environmental load and extremely high safety as compared to organic volatile foaming agents such as butane and chlorofluorocarbons. However, a foaming process using carbon dioxide gas is inferior in expandability to a process using an organic volatile foaming agent such as butane or a chlorofluorocarbon, and thus has a difficulty in achieving a high expansion ratio. In order to achieve weight reduction by a foaming process using carbon dioxide gas, various techniques to increase expansion ratio have been proposed so far.

For example, Patent Literature 1 discloses the following method. Expanded particles having been subjected to the first expansion (hereinafter referred to as "first-step expanded particles") are obtained by a process involving: dispersing polypropylene resin particles in a dispersion medium within a pressure-resistant container; raising temperature to a temperature equal to or above the softening point of the polypropylene resin particles and raising pressure; and thereafter releasing the polypropylene resin particles into an atmosphere having a pressure lower than the internal pressure of the pressure-resistant container by opening one end of the pressure-resistant container (this process is hereinafter referred to as "first-step expansion"). From these first-step expanded particles, expanded polypropylene resin particles (hereinafter referred to as "second-step expanded particles") having a higher expansion ratio than the first-step expanded particles are obtained by a process involving: imparting expandability to the first-step expanded particles again by impregnating them with a foaming agent such as air; and then allowing them to further expand by heating them with steam (this process is hereinafter referred to as "second-step expansion").

Patent Literature 2 discloses that, in the first-step expansion process, by impregnating polypropylene resin particles with carbon dioxide gas within a pressure-resistant container and releasing the polypropylene resin particles into an atmosphere of high temperature at 80°C to 100°C to thereby expand, it is possible to obtain first-step expanded particles having a high expansion ratio.

One technique to modify an in-mold expanded molded product is to add a polyethylene resin to a polypropylene resin.

For example, Patent Literature 3 discloses that it is possible to obtain expanded particles and an in-mold expanded molded product, which have huge and uniform cells, by using a polypropylene resin composition that contains a polypropylene resin and a large amount of a specific polyethylene resin serving as a melt strength improver.

Patent Literature 4 discloses an expanded product that is made from a propylene polymer resin composition obtained by adding a specific ethylene polymer resin to a propylene polymer resin in the same manner as Patent Literature 3.

Patent Literature 5 discloses that it is possible to obtain expanded particles which exhibit improved fusibility in in-mold foaming molding, by adding a specific polyethylene resin to a polyethylene resin.

Patent Literature 6 discloses a method for producing expanded particles of polypropylene, the particles produced, and molded products comprising the particles. Patent Literature 7 discloses a method for producing expanded particles by using a blend of polypropylene resin and high-density polyethylene.

Citation List

[Patent Literature]

    [Patent Literature 1]
    Japanese Patent Application Publication, Tokukai, No. 2009-256410 (publication date: November 5, 2009)
    [Patent Literature 2]
    PCT International Publication No. WO2014/136933 (Publication Date: September 12, 2014)
    [Patent Literature 3]
    Japanese Patent Application Publication, Tokukai, No. 2010-275499 (publication date: December 9, 2010)
    [Patent Literature 4]
    Japanese Patent Application Publication, Tokukai, No. 2010-265449 (publication date: November 25, 2010)
    [Patent Literature 5]
    PCT International Publication No. WO2009/047998 (Publication Date: April 16, 2009)
    [Patent Literature 6] EP-A-2 221 337
    [Patent Literature 7] WO-A-2015 98619

Summary of the Invention

Technical Problem

An object of the present invention is to provide a method for producing expanded polypropylene resin particles that provide, despite their high expansion ratio, an in-mold expanded molded product which maintains the inherent strength of a base resin, without impairing physical properties and quality such as fusibility during in-mold foaming molding and surface property.

Solution to the Problem

The inventors have studied hard to attain the above object, and found that, by preparing first-step expanded particles with few wrinkles from polypropylene resin particles, it is possible to obtain an in-mold expanded molded product that has a high compressive strength despite its light weight. The polypropylene resin particles are made of a polypropylene resin composition obtained by mixing a specific polyethylene resin to a polypropylene resin. Specifically, the present invention includes the following configurations.

    [1] A method for producing expanded particles of a polypropylene resin (Z), as defined in the appended claims, the method including:

        a step including dispersing particles of the polypropylene resin (Z) in an aqueous dispersion medium in a pressure-resistant container, introducing a foaming agent into the pressure-resistant container, and impregnating the particles of the polypropylene resin (Z) with the foaming agent under heat and pressure, the polypropylene resin (Z) being obtained by mixing not less than 1 part by weight and not more than 10 parts by weight of a polyethylene resin (Y), which has a density of 0.945 g/cm$^3$ or greater and less than 0.980 g/cm$^3$, to 100 parts by weight of a polypropylene resin (X), the polypropylene resin (Z) having a high-temperature-side crystal melting peak temperature of 146°C or above and 160°C or below, and

a step including releasing the particles of the polypropylene resin (Z) into a foaming atmosphere having a pressure lower than an internal pressure of the pressure-resistant container and having a foaming atmosphere temperature of 90° C or above and 105° C or below to allow the particles of the polypropylene resin (Z) to expand, thereby obtaining the expanded particles of the polypropylene resin (Z),

the expanded particles of the polypropylene resin (Z) having an expansion ratio of 20 times or greater and 40 times or less, a closed cell ratio of 90% or greater, and a percentage of wrinkle-induced shrinkage of 5% or less, the expanded particles of the polypropylene resin (Z) being produced through a single expansion process.

[2] An in-mold expanded molded product, as defined in the claims, which is made from expanded particles of the polypropylene resin (Z) having an expansion ratio of 20 times or greater and 40 times or less, the in-mold expanded molded product having compressive strength versus in-mold expanded molded product density, which (i) is obtained when measured and plotted on a coordinate plane with the in-mold expanded molded product density on a horizontal axis and the compressive strength on a vertical axis and (ii) lies on orabove an acceptance line determined by the following procedures (1) through (3):

(1) preparing samples of in-mold expanded molded products each made from expanded particles of a polypropylene resin (Z) whose base resin is the polypropylene resin (Z) and which have an expansion ratio of 10 times or greater and less than 20 times, the polypropylene resin (Z) having a high-temperature-side crystal melting peak temperature of 146°C or above 160°C or below and being obtained by mixing not less than 1 part by weight and not more than 10 parts by weight of a polyethylene resin (Y), which has a density of 0.945 g/cm$^3$ or greater and less than 0.980 g/cm$^3$, to 100 parts by weight of a polypropylene resin (X),

(2) measuring values of in-mold expanded molded product densities and compressive strengths of the samples and plotting the values on the coordinate plane as two or more points, and

(3) by using a linear approximation line as a reference line, determining, as the acceptance line, a line representing compressive strengths 3.0% below the reference line, the linear approximation line being based on the two or more points plotted in procedure (2) and passing through the origin of the coordinate plane.

Advantageous Effects of the Invention

According to the present invention, it is possible to provide a method for producing expanded polypropylene resin particles that provide, despite their high expansion ratio, an in-mold expanded molded product which maintains the inherent strength of a base resin, without impairing physical properties and quality such as fusibility during in-mold foaming molding and surface properties.

Brief Description of the Drawings

Fig. 1 is a graph showing Tmh of Example 1 of the present invention on a DSC curve.
Fig. 2 is a graph showing Tc of Example 1 of the present invention on a DSC curve.
Fig. 3 illustrates one example of the relationship between the density of an in-mold expanded molded product and the compressive stress at 50% compression of the in-mold expanded molded product (this relationship is for use in evaluating the strength of the in-mold expanded molded product).

Description of Embodiments

A method for producing expanded particles of a polypropylene resin (Z) of one embodiment of the present invention includes:

a step including dispersing particles of the polypropylene resin (Z) in an aqueous dispersion medium in a pressure-resistant container, introducing a foaming agent into the pressure-resistant container, and impregnating the particles of the polypropylene resin (Z) with the foaming agent under heat and pressure, the polypropylene resin (Z) being obtained by mixing not less than 1 part by weight and not more than 10 parts by weight of a polyethylene resin (Y), which has a density of 0.945 g/cm$^3$ or greater and less than 0.980 g/cm$^3$, to 100 parts by weight of a polypropylene resin (X), the polypropylene resin (Z) having a high-temperature-side crystal melting peak temperature of 146°C or above and 160°C or below, and

a step including releasing the particles of the polypropylene resin (Z) into a foaming atmosphere having a pressure lower than an internal pressure of the pressure-resistant container and having a foaming atmosphere temperature of 90° C or above and 105° C or below

to allow the particles of the polypropylene resin (Z) to expand, thereby obtaining the expanded particles of the polypropylene resin (Z),

the expanded particles of the polypropylene resin (Z) having an expansion ratio of 20 times or greater and 40 times or less, a closed cell ratio of 90% or greater, and a percentage of wrinkle-induced shrinkage of 5% or less,

the expanded particles of the polypropylene resin (Z) being produced through a single expansion process.

According to one embodiment of the present invention, it is possible to obtain an in-mold expanded molded product that has a high compressive strength despite its light weight, by using first-step expanded particles that have a high expansion ratio as high as 20 times or greater but have a low percentage of wrinkle-induced shrinkage of 5% or less. The first-step expanded particles are obtained from polypropylene resin particles made of a polypropylene resin composition obtained by mixing a specific polyethylene resin to a polypropylene resin.

In contrast, in cases of Patent Literatures 1 and 2, in a region where the polypropylene resin in-mold expanded molded product has a high expansion ratio, for example, in a region in which the in-mold expanded molded product density is 30 g/L or less, the inherent strength of the polypropylene resin is sometimes not "made full use of" as the strength of the in-mold expanded molded product. That is, in a region in which the in-mold expanded molded product has a low expansion ratio, the inherent strength of the resin is correlated to the strength of the in-mold expanded molded product, whereas, in a high expansion ratio region, the strength of the in-mold expanded molded product is sometimes lower than expected from the correlation.

In a case of Patent Literature 3, the expanded particles are those obtained by using an organic volatile foaming agent such as butane. Patent Literature 3 never mentions an inorganic foaming agent such as carbon dioxide gas. Furthermore, Patent Literature 3 does not mention the compressive strength of the in-mold expanded molded product, which is one object of the present invention, either. Moreover, Patent Literature 3 does not mention the closed cell ratio of expanded particles which is related to the compressive strength.

In a case of Patent Literature 4, the closed cell ratio disclosed in Examples is about 70%. In general, the strength of a polypropylene resin in-mold expanded molded product depends also on the closed cell ratio. In a case where the closed cell ratio is less than 90%, many cell membranes are broken, and therefore the in-mold expanded molded product has a low strength.

In a case of Patent Literature 5, the following issue is not mentioned: the strength of an in-mold expanded molded product in a high expansion ratio region is sometimes lower than expected from the strength of a polypropylene resin (raw material).

The polypropylene resin (X) for use in one embodiment of the present invention is not particularly limited, and examples include polypropylene homopolymers, ethylene/propylene random copolymers, butene-1/propylene random copolymers, ethylene/butene-1/propylene random copolymers, ethylene/propylene block copolymers, butene-1/propylene block copolymers, propylene-chlorinated vinyl copolymers, and propylene/maleic anhydride copolymers. Of these, ethylene/propylene random copolymers, butene-1/propylene random copolymers, and ethylene/butene-1/propylene random copolymers are suitable for their good foamability and good moldability.

With regard to the ethylene/propylene random copolymers, butene-1/propylene random copolymers, and ethylene/butene-1/propylene random copolymers, those which have a comonomer content (content of polymerization component other than propylene) of not less than 0.2 weight% and not more than 10 weight% with respect to 100 weight% thereof are suitably used.

A polymerization catalyst for polymerization of the polypropylene resin (X) for use in one embodiment of the present invention is not limited to a particular kind, and may be a Ziegler catalyst, a metallocene catalyst.

The melting point of the polypropylene resin (X) for use in one embodiment of the present invention is preferably 145°C or above and 160°C or below, more preferably 146°C or above and 155°C or below, in consideration of the high-temperature-side crystal melting peak temperature Tmh (described later) of the polypropylene resin (Z). A method of determining the melting point is the same as the method of determining Tmh, which will be described later.

The strength of the polypropylene resin (X) for use in one embodiment of the present invention is not particularly limited. It is preferable that the polypropylene resin (X) has a flexural modulus of 1400 MPa or greater. If the polypropylene resin (X) is strong enough, the polypropylene resin (Z) also tends to be strong enough, and the wrinkle-induced shrinkage of expanded particles is likely to be reduced even in the high expansion ratio region.

The melt index (hereinafter referred to as "MI") of the polypropylene resin (X) for use in one embodiment of the present invention is not particularly limited. In a case where the MI is 5 g/10min. or more and 15 g/10 min. or less, it becomes easy to obtain expanded particles and in-mold expanded molded product which have a high expansion ratio and a high closed cell ratio. The MI value used herein is a value obtained in accordance with JIS K7210 under the conditions involving a load of 2160 g and a temperature of 230±0.2°C.

The polyethylene resin (Y) for use in one embodiment of the present invention may contain a comonomer, other than ethylene, which is copolymerizable with ethylene, provided that a certain density of the polyethylene resin (Y) is achieved.

The comonomer copolymerizable with ethylene can be a C3 to C18 α-olefin. Examples of the C3 to C18 α-olefin include propene, 1-butene, 1-pentene, 1-hexene, 3,3-dimethyl-1-butene, 4-methyl-1-pentene, 4,4-dimethyl-1-pentene, and 1-octene. Each of these comonomers may be used individually or two or more of these comonomers may be used in combination.

The density of the polyethylene resin (Y) in one embodiment of the present invention is 0.945 g/cm³ or greater and less than 0.980 g/cm³, preferably 0.960 g/cm³ or greater and less than 0.980 g/cm³.

In a case where the density of the polyethylene resin (Y) is less than 0.945 g/cm³, the effect of reducing the wrinkle-induced shrinkage of expanded particles is not fully achieved. On the other hand, in a case where the density of the polyethylene resin (Y) is equal to or greater than 0.980 g/cm³, the polypropylene resin (Z) becomes brittle and therefore there is a concern that the impact strength of the in-mold expanded molded product may decrease. In addition, the expanded particles of the polypropylene resin (Z) may become difficult to extend and the moldability in in-mold foaming molding may decrease.

The melting point of the polyethylene resin (Y) for use in one embodiment of the present invention is not particularly limited. A resin having a melting point of 125°C or above and 140°C or below is suitably used.

The MI of the polyethylene resin (Y) for use in one embodiment of the present invention is not particularly limited. The MI preferably has substantially the same value as that of the polypropylene resin (X).

The mixing ratio of the polyethylene resin (Y) to the polypropylene resin (X) in the polypropylene resin (Z) for use in one embodiment of the present invention is not less than 1 part by weight and not more than 10 parts by weight, preferably not less than 2 parts by weight and not more than 8 parts by weight, with respect to 100 parts by weight of the polypropylene resin (X).

If the mixing ratio of the polyethylene resin (Y) is less than 1 part by weight, the effect of reducing wrinkle-induced shrinkage of expanded particles is not fully achieved. On the other hand, if the mixing ratio of the polyethylene resin (Y) is more than 10 parts by weight, the expanded particles during in-mold molding may become less expandable in molding and/or the closed cell ratio of the in-mold expanded molded product may decrease.

The high-temperature-side crystal melting peak temperature Tmh of the polypropylene resin (Z) for use in one embodiment of the present invention is 146°C or above and 160°C or below. In a case where the high-temperature-side crystal melting peak temperature Tmh of the polypropylene resin (Z) is below 146°C, expanded particles may undergo wrinkle-induced shrinkage in a high expansion ratio region. In a case where the high-temperature-side crystal melting peak temperature Tmh is above 160°C, in-mold foaming moldability may deteriorate.

The crystallization temperature Tc of the polypropylene resin (Z) for use in one embodiment of the present invention is preferably higher than the crystallization temperature Tcx of the polypropylene resin (X). In a case where the crystallization temperature Tc is higher than Tcx, the effect of reducing wrinkle-induced shrinkage of expanded particles is likely to be achieved.

The strength of the polypropylene resin (Z) for use in one embodiment of the present invention is not particularly limited. The polypropylene resin (Z) preferably has a flexural modulus of 1400 MPa or greater.

The MI of the polypropylene resin (Z) for use in one embodiment of the present invention is not particularly limited. In a case where the MI is 5 g/10min. or more and 15 g/10min. or less, it becomes easy to obtain expanded particles and in-mold expanded molded product which have a high expansion ratio and a high closed cell ratio.

In the polypropylene resin (Z) of one embodiment of the present invention, some additive(s) may be added, provided that the effects of the present invention are not impaired. Examples of the additives include water absorbing agents, foam nucleating agents, antioxidants, light-resistance improving agents, and flame retarders.

Examples of the water absorbing agents include, but are not limited to: polyethylene glycol, glycerin [chemical name: 1,2,3-propanetriol], and melamine [chemical name: 1,3,5-triazine-2,4,6-triamine]. Examples of particularly preferred water absorbing agents include polyethylene glycol and glycerin.

The amount of the water absorbing agent to be added is preferably not less than 0.01 parts by weight and not more than 10 parts by weight with respect to 100 parts by weight of the polypropylene resin (X). In a case where the amount is equal to or greater than 0.01 parts by weight, the effect brought about by the addition of the water absorbing agent is likely to be achieved, whereas, in a case where the amount is equal to or less than 10 parts by weight, expanded particles are less prone to wrinkle-induced shrinkage.

Examples of the foam nucleating agents include, but are not limited to, talc, kaolin, barium sulfate, zinc borate, and silicon dioxide.

Examples of the antioxidants include, but are not limited to, phenolic antioxidants and phosphorus-based antioxidants.

Examples of the light-resistance improving agents include, but are not limited to, hindered amine light-resistance improving agents.

Examples of the flame retarders include, but are not limited to, halogen flame retarders, phosphorus-based flame retarders, and hindered amine flame retarders.

In one embodiment of the present invention, it is normally preferable that the polypropylene resin (Z) is made into particles of the polypropylene resin (Z) in advance for easy use in foaming, by melting and kneading the polypropylene resin (Z) with use of an extruder, a kneader, a Banbury mixer, a roller and processing it into particles having a desired shape of a cylinder, an ellipse, a sphere, a cube, a rectangular parallelepiped, a tube (straw). It should be noted that the shapes of the particles of the polypropylene resin (Z) may change after expansion. For example, in an expansion process, the particles of the polypropylene resin (Z) may shrink and, if this is the case, the particles of the polypropylene resin (Z) having a shape of a cylinder or an ellipse may become expanded particles of the polypropylene resin (Z) having a spherical shape.

Of the production methods for particles of the polypropylene resin (Z), it is more preferable, from the viewpoint of productivity, to employ a method involving: melting and kneading the resin with an extruder; extruding the resin from an end of the extruder into a strand; and then cutting the strand to thereby obtain the particles of the polypropylene resin (Z).

The weight per particle of the particles of the polypropylene resin (Z) in one embodiment of the present invention is preferably 0.1 mg or greater and 100 mg or less, more preferably 0.3 mg or greater and 10 mg or less. In a case where the weight per particle of the particles of the polypropylene resin (Z) is 0.1 mg or greater, a sufficient expansion ratio tends to be obtained when the particles of the polypropylene resin (Z) are expanded. On the other hand, in a case where the weight per particle is 100 mg or less, a sufficient mold-filling property tends to be given even to a thin portion when the expanded particles of the polypropylene resin (Z), obtained from the particles of the polypropylene resin (Z), are to be expanded and molded in a mold. As used herein, the weight per particle of the particles of the polypropylene resin (Z) is the mean resin particle weight calculated from one hundred particles which are selected at random from the particles of the polypropylene resin (Z).

The weight per particle of the particles of the polypropylene resin (Z) does not change substantially even after an expansion process. Therefore, the weight per particle of the particles of the polypropylene resin (Z) can be regarded as the weight per particle of the expanded particles of the polypropylene resin (Z).

It is possible to produce the expanded particles of the polypropylene resin (Z) according to one embodiment of the present invention from the thus-obtained particles, which are for expansion, of the polypropylene resin (Z).

The expanded particles of the polypropylene resin (Z) according to one embodiment of the present invention can be produced in the following manner.

The expanded particles of the polypropylene resin (Z) can be produced by, for example: placing the particles of the polypropylene resin (Z), an aqueous medium, an inorganic dispersion agent, a foaming agent in a pressure-resistant container; dispersing the particles of the polypropylene resin (Z) with stirring, raising the temperature of the dispersion slurry to a temperature equal to or above the softening point of the particles of the polypropylene resin (Z), and raising the pressure of the dispersion slurry to a pressure equal to or greater than the saturated steam pressure at that temperature, and thereby impregnating the particles of the polypropylene resin (Z) with the foaming agent; and thereafter maintaining the dispersion slurry at that raised temperature for longer than 0 minutes and not longer than 120 minutes optionally; and thereafter releasing the dispersion slurry from the pressure-resistant container into a region having a pressure lower than the internal pressure of the pressure-resistant container to obtain the expanded particles of the polypropylene resin (Z). The region having a pressure lower than the internal pressure of the pressure-resistant container is preferably atmospheric pressure. It should be noted that one expansion process, which starts when the particles of the polypropylene resin (Z) are impregnated with the foaming agent and ends when the dispersion slurry is released from the pressured state into the lower pressure region, is referred to as a "first-step expansion process", and that the thus-obtained expanded particles of the polypropylene resin (Z) are referred to as "first-step expanded particles". It should be also noted that the dispersion slurry means a mixed slurry obtained by placing the particles of the polypropylene resin (Z), an aqueous medium, an inorganic dispersion agent, a foaming agent in a pressure-resistant container and dispersing the particles of the polypropylene resin (Z) with stirring.

In one embodiment of the present invention, the pressure-resistant container for use in producing the expanded particles of the polypropylene resin (Z) is not particularly limited, provided that the container is resistant to the pressure inside the container and the temperature inside the container. The pressure-resistant container is, for example, an autoclave-type pressure-resistant container.

The above-described "temperature equal to or above the softening point", to which the temperature inside the container is to be raised, preferably falls within a range of not lower than "the temperature 20°C below the high-temperature-side crystal melting peak temperature of the particles of the polypropylene resin (Z)" to not higher than "the temperature 10°C above the high-temperature-side crystal melting peak temperature of the particles of the polypropylene resin (Z)", for ensuring foamability. In one embodiment of the present invention, the temperature to which the temperature inside the container is to be raised is preferably 126°C or above and 170°C or below, although this temperature is appropriately selected in consideration of types of polypropylene resin and polyethylene resin (raw materials), type of foaming agent, desired expansion.

Examples of the aqueous medium for use in one embodiment of the present invention include water, alcohols, ethylene glycol, and glycerin. These can be used individually or two or more of them can be used in combination. In view of foamability, workability, safety,
using water is preferred, and using water alone is most preferred. In this specification, an aqueous medium may also be referred to as "aqueous dispersion medium".

The amount of the aqueous medium used can be not less than 50 parts by weight and not more than 500 parts by weight, preferably not less than 100 parts by weight and not more than 350 parts by weight, with respect to 100 parts by weight of the particles of the polypropylene resin (Z). The amount of not less than 50 parts by weight is preferred from the viewpoint of production, because agglomeration of particles of the polypropylene resin (Z) within the pressure-resistant container can be prevented. The amount of not more than 500 parts by weight is preferred from the viewpoint of production, because a reduction in productivity can be prevented.

Examples of the inorganic dispersion agent for use in one embodiment of the present invention include tertiary calcium phosphate, tertiary magnesium phosphate, basic magnesium carbonate, calcium carbonate, basic zinc carbonate, aluminum oxide, iron oxide, titanium oxide, aluminosilicate, kaolin, and barium sulfate. These inorganic dispersion agents may be used individually or two or more of these inorganic dispersion agents may be used in combination. From the viewpoint of stability of the dispersion slurry, tertiary calcium phosphate, kaolin, and barium sulfate are preferred. By keeping the stability of the dispersion slurry, it is possible to prevent particles of the polypropylene resin (Z) from agglomerating or forming lumps within the pressure-resistant container. This makes it possible to prevent, for example, the following incidents: the resultant expanded particles of the polypropylene resin (Z) are agglomerated; lumps of particles of the polypropylene resin (Z) remain in the pressure-resistant container and hinder the production of expanded particles of the polypropylene resin (Z); and productivity of the expanded particles of the polypropylene resin (Z) decreases.

In one embodiment of the present invention, it is preferable to additionally use a dispersion auxiliary agent in order to improve the stability of the dispersion slurry in the pressure-resistant container. Examples of the dispersion auxiliary agent include anionic surfactants. Specific examples include sodium dodecylbenzene sulfonate, sodium alkane sulfonates, sodium alkyl sulfonates, sodium alkyl diphenyl ether disulfonates, and sodium $\alpha$-olefin sulfonates. Specific examples of the sodium alkyl sulfonates include normal paraffin sodium sulfonate.

The amount of the inorganic dispersion agent and/or dispersion auxiliary agent used differs depending on their types and depending on the type and amount of the particles of the polypropylene resin (Z) used. Usually, it is preferable that the amount of the inorganic dispersion agent is not less than 0.1 pars by weight and not more than 5 parts by weight with respect to 100 parts by weight of the aqueous medium and that the amount of the dispersion auxiliary agent is not less than 0.001 parts by weight and not more than 0.3 parts by weight with respect to 100 parts by weight of the aqueous medium. Use of an appropriate amount of the inorganic dispersion agent and/or dispersion auxiliary agent makes it possible to prevent agglomeration of particles of the polypropylene resin (Z) within the pressure-resistant container. An appropriate amount of the inorganic dispersion agent and/or dispersion auxiliary agent is preferred also because the following incident can be prevented: a large amount of dispersion agent remains on the surfaces of the expanded particles of the polypropylene resin (Z) and becomes a cause of hindering the fusion of expanded particles of the polypropylene resin (Z) during molding (described later).

Examples of the foaming agent for use in one embodiment of the present invention include: organic foaming agents such as propane, normal butane, isobutane, normal pentane, isopentane, hexane, cyclopentane, and cyclobutane; and inorganic foaming agents such as carbon dioxide gas, water, air, and nitrogen. These foaming agents may be used individually or two or more of these foaming agents may be used in combination.

Of the foaming agents listed above, isobutane and normal butane are superior from the viewpoint that high expansion ratio can be achieved easily. However, these foaming agents are combustible and thus there are cautions that, for example, they require explosion-proof facilities. From the viewpoint of safety, it is preferable to use an inorganic foaming agent such as carbon dioxide gas, water, air, nitrogen. Using a foaming agent containing carbon dioxide gas is most preferred.

In one embodiment of the present invention, the amount of the foaming agent used is not particularly limited, and may be selected appropriately depending on the desired expansion ratio of the expanded particles of the polypropylene resin (Z). Usually, the amount of the foaming agent is preferably not less than 2 parts by weight and not more than 60 parts by weight with respect to 100 parts by weight of the particles of the polypropylene resin (Z).

The expansion ratio of the expanded particles of the polypropylene resin (Z) for use in one embodiment of the present invention is 20 times or greater and 40 times or less, preferably 25 times or greater and 40 times or less. In a case where the expansion ratio is less than 20 times, the object of the present invention does not often arise. In a case where the expansion ratio is greater than 40 times, it may be difficult to obtain first-step expanded particles with reduced wrinkle-induced shrinkage of the present invention.

Meanwhile, the following method is known as a method of obtaining expanded particles of the polypropylene resin (Z) having a high expansion ratio as high as 20 times or greater and 40 times or less in a first-step expansion process. An example is a method in which an organic foaming agent, an inorganic foaming agent, or a mixture of these foaming agents is used in great quantity. An especially safe method is to obtain expanded particles of the polypropylene resin (Z) having a high expansion ratio through a combined expansion which utilizes the expandability of carbon dioxide gas and that of water. In this method, the earlier-described water absorbing agent can be added to the polypropylene resin (Z) in order to help impregnation of water into the particles of the polypropylene resin (Z).

As an alternative, the expanded particles of the polypropylene resin (Z) having a high expansion ratio can be obtained by, for example, a method by which the temperature of a region having a low pressure, into which the dispersion slurry is to be released, is kept high in the first-step expansion process. (Such a region is hereinafter referred to as "foaming atmosphere", and such a temperature is hereinafter referred to as "foaming atmosphere temperature".) The foaming atmosphere temperature is 90°C or above and 105°C or below, preferably 95°C or above and 105°C or below. If the foaming atmosphere temperature is 90°C or above, the effect of improving the expansion ratio of expanded particles is sufficiently achieved. If the foaming atmosphere temperature is 105°C or below, agglomeration of expanded particles can be prevented or reduced. As used herein, the "agglomeration" means a phenomenon in which expanded particles, whose resin on the surfaces is melted, adhere to each other to form aggregations.

In order to obtain the expanded particles of the polypropylene resin (Z) having a high expansion ratio as high as 20 times or greater and 40 times or less in the first-step expansion process, it is only necessary to appropriately combine the above-described foaming agent and additive(s) with the above-described foaming atmosphere temperature.

The closed cell ratio of the expanded particles of the polypropylene resin (Z) for use in one embodiment of the present invention is 90% or more. In a case where the closed cell ratio is less than 90%, many cell membranes are broken, and therefore the in-mold expanded molded product may have a low strength.

The percentage of wrinkle-induced shrinkage of the expanded particles of the polypropylene resin (Z) for use in one embodiment of the present invention is 5% or less. The percentage of wrinkle-induced shrinkage means, assuming that the apparent surface area of an expanded particle does not change before and after the shrinkage, the percentage of "volume (v) reduced due to wrinkles" of the expanded particle with respect to "maximum volume (v')" of the expanded particle (this will be described later in Examples). In a case where the percentage of wrinkle-induced shrinkage is 5% or less, the strength of an in-mold expanded molded product is likely to be roughly as expected from the flexural modulus of a polypropylene resin (raw material).

As used herein, the wrinkle-induced shrinkage of expanded particles means a phenomenon in which, immediately after the first-step expansion (i.e., immediately after the heated particles of the polypropylene resin (Z) are released into an atmosphere having a pressure lower than the pressure inside the pressure-resistant container) and when the expanded particles having a high closed cell ratio undergo a transition from a soft state to a solid state, internal pressure decreases due to condensation of moisture inside the expanded particles and change in volume of gas inside the expanded particles, and thereby the expanded particles shrink and become wrinkled. Wrinkles of the expanded particles indicate that resin films constituting the expanded particles have been buckled. In a case where the expansion ratio of the expanded particles of the polypropylene resin (Z) is 20 times or greater, the resin films are likely to be buckled, unless the present invention is used.

The present invention has revealed that, if the resin films constituting the expanded particle have a history of having been buckled, the strength of the resulting in-mold expanded molded product is lower than expected from a polypropylene resin (raw material). The present invention provides, by preventing or reducing the wrinkle-induced shrinkage which is indicative of the history of the buckling, an in-mold expanded molded product whose strength has not decreased despite its high expansion ratio.

By the way, for the purpose of obtaining expanded particles of the polypropylene resin (Z) having a high expansion ratio, expanded particles of the polypropylene resin (Z) obtained from the first-step expansion process (these particles are first-step expanded particles) can be expanded again to have a higher expansion ratio.

The expansion ratio can be increased by, for example: producing first-step expanded particles through "pressure-release expansion"; and placing the first-step expanded particles in a pressure-resistant container and allowing the first-step expanded particles, whose internal pressure has been made higher than normal pressure by a pressure treatment at not less than 0.1 MPa (gage pressure) and not higher than 0.6 MPa (gage pressure) using nitrogen, air, carbon dioxide gas, to further expand by heating the first-step expanded particles with steam. Such a process, in which first-step expanded particles are further expanded in another process to have a higher expansion ratio, is referred to as "second-step expansion process", and the resulting expanded particles of the polypropylene resin (Z) are referred to as "second-step expanded particles".

Note, however, that this second-step expansion process is a process in which first-step expanded particles are expanded and extended at low temperature (about 100°C to 120°C, steam pressure is equal to or less than 0.10 MPa [gage pressure]) as compared to the first-step expansion process, and that the first-step expanded particles have a low resin flowability during extension. Therefore, the resin films of the second-step expanded particles tend to become thin locally or become strained locally. For these reasons, generally, the resulting second-step expanded particles, especially when having a high expansion ratio, sometimes cannot achieve desired physical properties such as desired compressive strength, as compared to first-step expanded particles having the same expansion ratio. In this regard, the expanded particles of the polypropylene resin (Z) in accordance with one embodiment of the present invention are first-step expanded particles obtained through a first-step expansion process, and thus are likely to achieve desired physical properties such as desired compressive strength.

The expanded particles of the polypropylene resin (Z) in accordance with one embodiment of the present invention are formed into a polypropylene resin in-mold expanded molded product by carrying out a typical in-mold foaming molding.

In a case where the expanded particles of the polypropylene resin (Z) are to be used in in-mold foaming molding, the following known methods can be employed, for example: A) a method in which the expanded particles of the polypropylene resin (Z) are used "as-is"; B) a method in which an inorganic gas such as air is injected into expanded particles to impart expandability (internal pressure) in advance; C) a method in which expanded particles, which are in a compressed state, are filled into a mold to be molded.

A method of producing a polypropylene resin in-mold expanded molded product from expanded particles of the polypropylene resin (Z) in one embodiment of the present invention is, for example, a method involving: filling the expanded particles of the polypropylene resin (Z) into a mold which is closable but not hermetically; allowing the expanded particles of the polypropylene resin (Z) to fuse together by heating them using steam as a heating medium at a heating steam pressure of about not less than 0.05 MPa (gage pressure) and not higher than 0.5 MPa (gage pressure) for about 3 seconds or longer and 30 seconds or shorter; and thereafter cooling the mold with water to the extent that deformation of an in-mold expanded molded product will be prevented or reduced after the in-mold expanded molded product is removed from the mold; and thereafter opening the mold to obtain the in-mold expanded molded product.

The in-mold expanded molded product, which has been produced by the above-described method, preferably has an in-mold expanded molded product density (also referred to as apparent density) of 15 g/L or greater and 30 g/L or less. If the in-mold expanded molded product density is 15 g/L or greater, generally a good in-mold expanded molded product with little deformation or shrinkage is likely to be obtained. If the in-mold expanded molded product density is 30 g/L or less, the effect of preventing or reducing a decrease in strength of the in-mold expanded molded product becomes more remarkable. The in-mold expanded molded product density may be 15 g/L or greater and less than 25 g/L.

It should be noted that the in-mold expanded molded product density is a value obtained by dividing the weight of an in-mold expanded molded product by the volume of the in-mold expanded molded product. The volume of an in-mold expanded molded product is calculated from its external dimensions in a case where the in-mold expanded molded product has the shape of, for example, a simple rectangular parallelepiped. In a case where the in-mold expanded molded product has a complex shape, the volume of the in-mold expanded molded product is measured in terms of, for example, submerged volume (= [load which is buoyancy obtained when the in-mold expanded molded product is submerged in water] / [density of water $\times$ gravitational acceleration]).

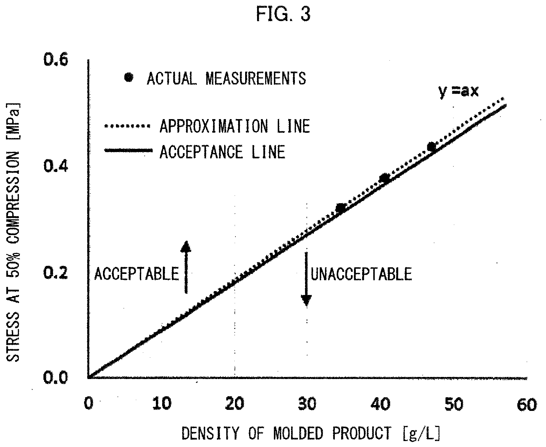

The compressive strength versus in-mold expanded molded product density of the in-mold expanded molded product in accordance with one embodiment of the present invention preferably lies on or above an acceptance line shown in Fig. 3. The acceptance line is determined by the following procedures.

(1) Expanded particles of the polypropylene resin (Z), which have an expansion ratio of 10 times or greater and less than 20 times, are prepared by using, as a base resin, a polypropylene resin (Z) that is the same in composition as a material for an in-mold expanded molded product to be evaluated. Next, in-mold expanded molded product samples are each prepared from the thus-obtained expanded particles of the polypropylene resin (Z). The methods of preparing the expanded particles of the polypropylene resin (Z) and in-mold expanded molded products have already been described earlier.

(2) The in-mold expanded molded product densities and the compressive strengths of the samples prepared in procedure (1) are measured. The measured values are plotted, as two or more points, on a coordinate plane in which the in-mold expanded molded product density is taken along the horizontal axis and the compressive strength is taken along the vertical axis. In doing so, the two points to be plotted on the coordinate plane may be obtained by measuring two or more in-mold expanded molded product samples made of expanded particles of the polypropylene resin (Z) having the same expansion ratio, or may be obtained by measuring two or more in-mold expanded molded product samples made of two kinds of expanded particles of the polypropylene resin (Z) having different expansion ratios. From the viewpoint that it is easy to draw an approximation line in procedure (3), it is preferable that two or more kinds of in-mold expanded molded product samples made from two or more kinds of expanded particles of the polypropylene resin (Z) having different expansion ratios are prepared and that their in-mold expanded molded product densities and compressive strengths are measured.

The method of determining the in-mold expanded molded product density has already been described earlier. In regard to the compressive strength, stress at 50% compression can be used as an indicator, for example. Note, however, that any of publicly known indicators can be used without limitation.

(3) On the basis of the points plotted in procedure (2), a linear approximation line passing through the origin of the coordinate plane is drawn (dotted line in Fig. 3). The linear approximation line can be determined by a publicly known method of deriving regression line (e.g., method of least squares). Next, a line representing compressive strengths 3.0% below the linear approximation line is determined as the acceptance line (solid line in Fig. 3). That is, in a case where the linear approximation line is represented by y = ax, the acceptance line is represented by y = 0.97ax.

In a case where the compressive strength versus in-mold expanded molded product density of an in-mold expanded molded product in accordance with one embodiment of the present invention is measured and plotted on the coordinate plane and where the plotted point lies on or above the acceptance line determined by the above procedures, this means that the compressive strength has not excessively decreased despite an increased expansion ratio. This is thus preferred. It should be noted that the phrase "on or above the acceptance line" means that the plotted point is present on the acceptance line or in an area above the acceptance line (such an area is indicated by "ACCEPTABLE" in Fig. 3).

Examples

The following description will discuss this experiment on the basis of Examples and Comparative Examples. Note, however, that the present invention is not limited to these Examples.

Evaluations in Examples and Comparative Examples were carried out in the following manner.

(Crystallization temperature Tc and high-temperature-side crystal melting peak temperature Tmh)

By calorimetry using Model DSC6200 (available from Seiko Instruments Inc.), a resin in an amount of 4 mg or more and 6 mg or less was heated from 40°C to 220°C at a heating rate of 10°C/min. so that the resin melted, and then crystallization temperature Tc and high-temperature-side crystal melting peak temperature Tmh were determined by the following procedures.

(i) First, the resin was cooled from 220°C to 40°C at a cooling rate of 10°C/min. so that crystallization occurred. The crystallization peak temperature obtained here was determined as Tc.

(ii) Next, the resin was again heated from 40°C to 220°C at a heating rate of 10°C/min. to obtain a DSC curve. The peak at the highest temperature on the DSC curve was determined as the high-temperature-side crystal melting peak temperature Tmh.

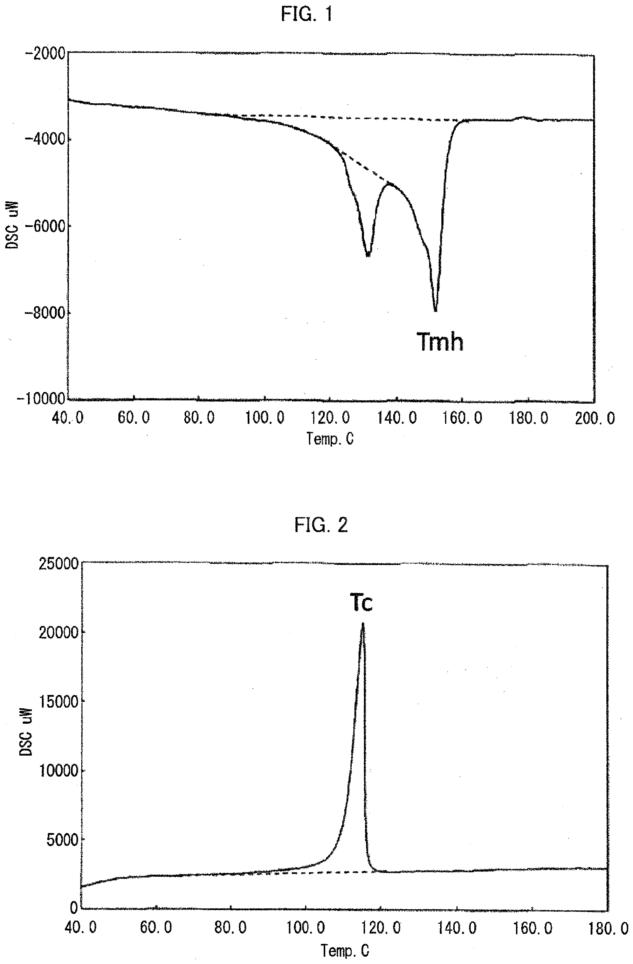

The Tmh determined based on a DSC curve of the polypropylene resin (Z) in accordance with Example 1 is shown in Fig. 1, whereas the Tc determined based on a DSC curve of the polypropylene resin (Z) in accordance with Example 1 is shown in Fig. 2.

As shown in Fig. 1, the DSC curve obtained in procedure (ii) described above shows two crystal melting peak temperatures: the low-temperature-side crystal melting peak temperature inferred to have resulted mainly from a polyethylene resin (Y); and the high-temperature-side crystal melting peak temperature Tmh inferred to have resulted mainly from a polypropylene resin (X).

As shown in Fig. 2, in regard to the DSC curve obtained in procedure (i) described above, the crystallization peak temperature Tc has only a single peak despite that the polyethylene resin (Y) has been added to the polypropylene resin (X).

(Expansion ratio of expanded particles)

With regard to expanded particles having a bulk volume of about 50 cm$^3$, the weight w (g) of the expanded particles and the volume v (cm$^3$) of the expanded particles submerged in ethanol were measured. The expansion ratio of the expanded particles was calculated using the following equation:

$$\text{Expansion ratio of expanded particles (times)} = d \times v/w$$

where d represents the density (d = 0.9 (g/cm$^3$)) of unexpanded resin particles.

(Closed cell ratio of expanded particles)

In accordance with the method defined in PROCEDURE C of ASTM D2856-87, closed cell ratio (%) was calculated using the following equation:

$$\text{Closed cell ratio of expanded particles (\%)} = (1 - (Va - Vc) / Va) \times 100$$

where Vc represents the volume (cm$^3$) of the obtained expanded particles.

The Vc was measured with the use of an air comparison pycnometer (model 1000 available from TOKYO SCIENCE). The volume Va (cm$^3$) is apparent volume of the expanded particles determined in the following manner: after the Vc of expanded particles was measured with the use of the air comparison pycnometer, these expanded particles were entirely submerged in ethanol in a graduated cylinder, and the volume Va (cm$^3$) of the expanded particles was determined from the difference in the liquid level of the graduated cylinder (submersion method).

(Percentage of wrinkle-induced shrinkage of expanded particles)

With regard to expanded particles having a bulk volume of about 100 cm$^3$, the volume v (cm$^3$) of the expanded particles submerged in ethanol was measured. Next, the expanded particles were entirely recovered and dried at ambient temperature and thereby ethanol fully evaporated. Then, the particles were placed in a hermetically closable pressure-resistant container, and an internal pressure of 0.20 MPa (absolute pressure) was imparted to the expanded particles by raising the pressure inside the container to 0.30 MPa (gage pressure) at a rate of not more than 0.1 MPa/60min. These expanded particles were removed from the pressure-resistant container, and the volume v' thereof was measured by submersing them in ethanol, in the same manner as the volume v. The percentage of wrinkle-induced shrinkage was calculated using the following equation.

$$\text{Percentage of wrinkle-induced shrinkage of expanded particles (\%)} = 100 \times (1 - v/v')$$

(In-mold expanded molded product density)

Three sides, which are along the long axis, short axis, and thickness, of the obtained in-mold expanded molded product (in the shape of a rectangular parallelepiped) were measured with the use of a caliper, and the dimensional volume was calculated by multiplying those dimensions together. The in-mold expanded molded product density was calculated using the following equation from the dimensional volume and the volume which was separately measured.

$$\text{In-mold expanded molded product density} = (\text{weight}) / (\text{dimension along long axis} \times \text{dimension along short axis} \times \text{dimension along thickness})$$

(Compressive strength of in-mold expanded molded product)

Four test pieces each having a size of length 50 mm × width 50 mm × thickness 25 mm were cut from each of the obtained in-mold expanded molded products. In accordance with NDS-Z0504, each test piece was compressed at a rate of 10 mm/min., and the compressive stress (MPa) of the test piece was measured when the test piece was 50% compressed (such a compressive stress is hereinafter referred to as "compressive strength"). The compressive strength of each in-mold expanded molded product was evaluated on the basis of the following criteria.
Acceptable: Compressive strengths of all the test pieces are on or above the acceptance line.

Unacceptable: One or more of the test pieces have a compressive strength below the acceptance line.

Fig. 3 shows the relationship between the density and compressive strength of an in-mold expanded molded product. The reference line and the acceptance line were determined by plotting compressive strength versus in-mold expanded molded product density of each in-mold expanded molded product made from expanded particles having an expansion ratio less than 20 times. Specifically, the reference line and the acceptance line were determined in the following manner. With regard to each of the polypropylene resins (Z) shown in Tables 1 and 2, three kinds of expanded particles of the polypropylene resin (Z), having expansion ratios of about 12 times, about 14 times, and about 16, respectively, were prepared by only adjusting the expansion pressure and leaving other expansion conditions in Tables unchanged. Next, three kinds of in-mold expanded molded products, having in-mold expanded molded product densities of about 45 g/L, about 40 g/L, and about 35 g/L, respectively, were obtained from the above three kinds of expanded particles of the polypropylene resin (Z).With regard to each of the three kinds of in-mold expanded molded products, the compressive strength versus in-mold expanded molded product density was plotted as shown in Fig. 3, and a linear approximation line passing through the origin (at which in-mold expanded molded product density is 0 g/L and compressive strength is 0 MPa) was drawn. The linear approximation line was used as the reference line. The slope of the reference line is represented by "a". Furthermore, a line representing compressive strengths 3.0% below the reference line was drawn, and was used as the acceptance line.

In Tables 1 and 2, a compressive strength lying on or above the acceptance line means that, even in a case where the polypropylene resin (Z) is processed into an in-mold expanded molded product having a high expansion ratio, the in-mold expanded molded product has a compressive strength that has not excessively decreased despite its increased expansion ratio (i.e., the ratio of the compressive strength to the in-mold expanded molded product density has not decreased even in comparison with an in-mold expanded molded product having a low expansion ratio). In the opposite case in which the compressive strength is below the acceptance line, this means that, in a case where the polypropylene resin (Z) is formed into an in-mold expanded molded product having a high expansion ratio, the compressive strength has excessively decreased due to the increased expansion ratio.

(Fusibility of in-mold expanded molded product)

An about 10 mm deep cut was made in an in-mold expanded molded product, which was obtained through in-mold foaming molding at a heating pressure of 0.32 MPa (gage pressure) and which had a size of length 400 mm × width 300 mm × thickness 50 mm, with an art knife along a line connecting point A (100 mm away from one vertex along the direction of the vertical axis) and point B (100 mm away from the vertex along the direction of the horizontal axis), and then the in-mold expanded molded product was split. The split surface was checked. The total number N of expanded particles present within an area of 15 mm × 15 mm on the split surface and the number Ns of expanded particles separated at interfaces were counted, and the percentage of the number Ns with respect to the number N was calculated. Fusibility was evaluated on the basis of the following criteria.

$$\text{Rate of fusion of in-mold expanded molded product (\%)} = 100 \times (1 - Ns/N)$$

Good: Rate of fusion is 80% or greater
Average: Rate of fusion is 60% or greater and less than 80%
Poor: Rate of fusion is less than 60%

(Surface smoothness of in-mold expanded molded product)

With regard to an in-mold expanded molded product obtained through in-mold foaming molding at a heating pressure of 0.32 MP a (gage pressure), the number of inter-particle dimples on mold surface within an area of 50 mm × 50 mm on the surface of the in-mold expanded molded product was counted. The surface smoothness was evaluated on the basis of the following criteria.

Good: The number of inter-particle dimples on mold surface of 1 mm$^2$ or larger is less than 5.
Average: The number of inter-particle dimples on mold surface of 1 mm$^2$ or larger is 5 or more and less than 10.
Poor: The number of inter-particle dimples on mold surface of 1 mm$^2$ or larger is 10 or more.

(Resins and water absorbing agents used in Examples)

(1) Polypropylene resin (X)

- Polypropylene resin A

    R3410 (LG)
    Melting point 148°C, flexural modulus 1498 MPa, MI = 7.1 g/min.

- Polypropylene resin B

    F227A (Prime Polymer)
    Melting point 143°C, flexural modulus 1250 MPa, MI = 6.2 g/min.

- Polypropylene resin C

    E228 (Prime Polymer)
    Melting point 146°C, flexural modulus 1300 MPa, MI = 8.0 g/min.

- Polypropylene resin D

    J106G (Prime Polymer)
    Melting point 162°C, flexural modulus 1600 MPa, MI = 15.0 g/min.

(2) Polyethylene resin (Y)

- Polyethylene resin A

    HI-ZEX 2200J (Prime Polymer)
    Density 0.964 g/cm$^3$, Melting point 135°C

- Polyethylene resin B

    NEO-ZEX 2540R (Prime Polymer)
    Density 0.923 g/cm$^3$, Melting point 121°C

(3) Water absorbing agent

- Glycerin (Kao Chemicals): Refined glycerin
- Polyethylene glycol (Lion Corporation): PEG#300

(Examples 1 to 8)

[Preparation of polypropylene resin particles]

A polypropylene resin (X), a polyethylene resin (Y), and a water absorbing agent shown in Table 1 in amounts shown in Table 1 were mixed together, kneaded (at a resin temperature of 210°C) with an extruder of 50 mm in diameter, extruded from an end of the extruder into a strand, and then cut to thereby granulate the strand. In this way, resin particles (1.2 mg per particle) made from a polypropylene resin (Z) were produced.

[Preparation of polypropylene resin first-step expanded particles]

To a 10 L pressure-resistant container, 300 parts by weight of water, 100 parts by weight of the above-obtained particles of the polypropylene resin (Z), 1.0 part by weight of tertiary calcium phosphate (as a dispersion agent), 0.5 parts by weight of normal paraffin sodium sulfonate (as a dispersion auxiliary agent), and 6.0 parts by weight of carbon dioxide gas (as a foaming agent) were introduced, heated with stirring, and maintained for 30 minutes at an expansion temperature (temperature inside the container) and an expansion pressure (pressure inside the container) shown in Table 1. Then, while the expansion pressure was maintained by use of carbon dioxide gas, the dispersion slurry was released through a 3 mm diameter orifice at the bottom of the pressure-resistant container into a foaming atmosphere in which the conditions shown in Table 1 were maintained. In this way, first-step expanded particles were obtained.

[Preparation of in-mold expanded molded product from polypropylene resin first-step expanded particles]

Next, an internal pressure of 0.2 MPa (absolute pressure) was imparted to the obtained first-step expanded particles, the first-step expanded particles were filled into a mold in the shape of a rectangular parallelepiped having a size of length 400 mm × width 300 mm × thickness 50 mm, allowed to fuse together by heating them with steam (0.32 MPa [gage pressure]) for 12 seconds to obtain an in-mold expanded molded product, and the in-mold expanded molded product was removed from the mold. The in-mold expanded molded product thus removed from the mold was dried and cured in a dryer at 75°C for 24 hours, and thereafter the in-mold expanded molded product was checked for its quality. The results are shown in Table 1.

(Example 9)

[Preparation of polypropylene resin particles]

A polypropylene resin (X) and a polyethylene resin (Y) shown in Table 1 in amounts shown in Table 1 were mixed together, kneaded (at a resin temperature of 210°C) with an extruder of 50 mm in diameter, extruded from an end of the extruder into a strand, and then cut to thereby granulate the strand. In this way, resin particles (1.2 mg per particle) made from a polypropylene resin (Z) were produced.

[Preparation of polypropylene resin first-step expanded particles]

To a 10 L pressure-resistant container, 300 parts by weight of water, 100 parts by weight of the above-obtained particles of the polypropylene resin (Z), 1.5 parts by weight of tertiary calcium phosphate (as a dispersion agent), 0.05 parts by weight of normal paraffin sodium sulfonate (as a dispersion auxiliary agent), and 10.0 parts by weight of isobutane (as a foaming agent) were introduced, heated with stirring, and maintained for 30 minutes at an expansion temperature (temperature inside the container) and an expansion pressure (pressure inside the container) shown in Table 1. Then, while the expansion pressure was maintained by use of carbon dioxide gas, the dispersion slurry was released through a 3 mm diameter orifice at the bottom of the pressure-resistant container into a foaming atmosphere in which the conditions shown in Table 1 were maintained. In this way, first-step expanded particles were obtained.

[Preparation of in-mold expanded molded product from polypropylene resin first-step expanded particles]

Next, an internal pressure of 0.2 MPa (absolute pressure) was imparted to the obtained first-step expanded particles, the first-step expanded particles were filled into a mold in the shape of a rectangular parallelepiped having a size of length 400 mm × width 300 mm × thickness 50 mm, allowed to fuse together by heating them with steam (0.32 MPa [gage pressure]) for 12 seconds to obtain an in-mold expanded molded product, and the in-mold expanded molded product was removed from the mold. The in-mold expanded molded product thus removed from the mold was dried and cured in a dryer at 75°C for 24 hours, and thereafter the in-mold expanded molded product was checked for its quality. The results are shown in Table 1.

It should be noted that, in Table 1, the "PE" represents polyethylene, "$CO_2$" represents carbon dioxide gas, and "Bu" represents isobutane.

[Table 1]

| Polypropylene resin (Z) | | | | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|---|
| | Difference from Example 1 | | | | Amount of water absorbing agent | Type of water absorbing agent | Amount of PE | Amount of PE | Expansion temperature | Amount of PE, type of water absorbing agent | Tmh | No water absorbing agent, type of foaming agent |
| | Polypropylene resin (X) | Polypropylene resin A | parts by weight | 100 | 100 | 100 | 100 | 100 | 100 | 100 | - | 100 |
| | | Polypropylene resin B | parts by weight | - | - | - | - | - | - | - | - | - |
| | | Polypropylene resin C | parts by weight | - | - | - | - | - | - | - | 100 | - |
| | | Polypropylene resin D | parts by weight | - | - | - | - | - | - | - | - | - |
| | Polyethylene resin (Y) | Polyethylene resin A | parts by weight | 5 | 5 | 5 | 2 | 8 | 5 | 2 | 5 | 5 |
| | | Polyethylene resin B | parts by weight | - | - | - | - | - | - | - | - | - |
| | Water absorbing agent | Glycerin | parts by weight | 0.5 | 0.3 | - | 0.5 | 0.5 | 0.5 | 0.15 | 0.3 | - |
| | | Polyethylene glycol | parts by weight | - | - | 0.5 | - | - | - | - | - | - |
| | Crystallization temperature Tc | | °C | 115 | 115 | 114 | 112 | 118 | 115 | 112 | 114 | 115 |
| | High-temperature-side crystal melting peak temperature Tmh | | °C | 148 | 148 | 148 | 148 | 148 | 148 | 148 | 146 | 148 |

(continued)

| | | unit | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|
| Difference from Example 1 | | | | Amount of water absorbing agent | Type of water absorbing agent | Amount of PE | Amount of PE | Expansion temperature | Amount of PE, type of water absorbing agent | Tmh | No water absorbing agent, type of foaming agent |
| Expansion conditions | Expansion temperature | °C | 151 | 151 | 151 | 152 | 151 | 151 | 152 | 149 | 145 |
| | Foaming agent | - | $CO_2$ | $CO_2$ | $CO_2$ | $CO_2$ | $CO_2$ | $CO_2$ | $CO_2$ | $CO_2$ | Bu |
| | Expansion pressure (gage pressure) | MPa | 3.0 | 3.0 | 3.0 | 3.0 | 3.0 | 3.0 | 3.5 | 3.0 | 2.0 |
| | Foaming atmosphere temperature | °C | 103 | 103 | 103 | 103 | 103 | 96 | 103 | 103 | 103 |
| | First-step expansion ratio (true ratio) | times | 30 | 27 | 26 | 26 | 26 | 28 | 27 | 28 | 33 |
| Expanded particles | Second-step expansion ratio (true ratio) | times | - | - | - | - | - | - | - | - | - |
| Expanded particles of polypropylene resin (Z) | Closed cell ratio | % | 98 | 99 | 99 | 99 | 99 | 99 | 98 | 98 | 94 |
| | Percentage of wrinkle-induced shrinkage | % | 3.9 | 2.6 | 0.8 | 4.7 | 3.1 | 4.3 | 3.1 | 2.7 | 4.1 |

| | | | | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|---|
| | Difference from Example 1 | | | | Amount of water absorbing agent | Type of water absorbing agent | Amount of PE | Amount of PE | Expansion temperature | Amount of PE, type of water absorbing agent | Tmh | No water absorbing agent, type of foaming agent |
| In-mold expanded molded product | | Density | g/L | 23 | 26 | 27 | 27 | 27 | 25 | 26 | 25 | 21 |
| | | Slope "a" of reference line in Fig. 3 ×1000 | MPa/(g/L) | 9.58 | 9.58 | 9.58 | 9.54 | 9.75 | 9.58 | 9.54 | 9.45 | 9.58 |
| | | Compressive strength | - | Acceptable | Acceptable | Acceptable | Acceptable | Acceptable | Acceptable | Acceptable | Acceptable | Acceptable |
| | | Fusibility (0.32 MPa) | - | Good | Good | Good | Good | Good | Good | Good | Good | Good |
| | | Surface smoothness | - | Good | Good | Good | Good | Good | Good | Good | Good | Good |

Note:"Ex." stands for Example.

EP 3 381 976 B1

(Comparative Examples 1 to 7)

[Preparation of polypropylene resin particles]

A polypropylene resin (X), a polyethylene resin (Y), and a water absorbing agent shown in Table 2 in amounts shown in Table 2 were mixed together, kneaded (at a resin temperature of 210°C) with an extruder of 50 mm in diameter, extruded from an end of the extruder into a strand, and then cut to thereby granulate the strand. In this way, resin particles (1.2 mg per particle) made from a polypropylene resin (Z) were produced.

[Preparation of polypropylene resin first-step expanded particles]

To a 10 L pressure-resistant container, 300 parts by weight of water, 100 parts by weight of the above-obtained particles of the polypropylene resin (Z), 1.0 part by weight of tertiary calcium phosphate (as a dispersion agent), 0.5 parts by weight of normal paraffin sodium sulfonate (as a dispersion auxiliary agent), and 6.0 parts by weight of carbon dioxide gas (as a foaming agent) were introduced, heated with stirring, and maintained for 30 minutes at an expansion temperature (temperature inside the container) and an expansion pressure (pressure inside the container) shown in Table 2. Then, while the expansion pressure was maintained by use of carbon dioxide gas, the dispersion slurry was released through a 3 mm diameter orifice at the bottom of the pressure-resistant container into a foaming atmosphere in which the conditions shown in Table 2 were maintained. In this way, first-step expanded particles were obtained.

[Preparation of in-mold expanded molded product from polypropylene resin first-step expanded particles]

Next, an internal pressure of 0.2 MPa (absolute pressure) was imparted to the obtained first-step expanded particles, the first-step expanded particles were filled into a mold in the shape of a rectangular parallelepiped having a size of length 400 mm × width 300 mm × thickness 50 mm, allowed to fuse together by heating them with steam (0.32 MPa [gage pressure]) for 12 seconds to obtain an in-mold expanded molded product, and the in-mold expanded molded product was removed from the mold. The in-mold expanded molded product thus removed from the mold was dried and cured in a dryer at 75°C for 24 hours, and thereafter the in-mold expanded molded product was checked for its quality. The results are shown in Table 2. It should be noted that, in Table 2, the "PE" represents polyethylene, and "$CO_2$" represents carbon dioxide gas.

[Table 2]

| Polypropylene resin (Z) | | | | Com. Ex. 1 | Com. Ex. 2 | Com. Ex. 3 | Com. Ex. 4 | Com. Ex. 5 | Com. Ex. 6 | Com. Ex. 7 |
|---|---|---|---|---|---|---|---|---|---|---|
| Difference from Example 1 | | | | No PE | Amount of PE | Tmh | Type of PE | Second-step expansion | Tmh | Expansion ratio, closed cell ratio |
| | Polypropylene resin (X) | Polypropylene resin A | parts by weight | 100 | 100 | - | 100 | 100 | - | 100 |
| | | Polypropylene resin B | parts by weight | - | - | 100 | - | - | - | - |
| | | Polypropylene resin C | parts by weight | - | - | - | - | - | - | - |
| | | Polypropylene resin D | parts by weight | - | - | - | - | - | 100 | - |
| | Polyethylene resin (Y) | Polyethylene resin A | parts by weight | - | 12 | 5 | - | 5 | 5 | 5 |
| | | Polyethylene resin B | parts by weight | - | - | - | 5 | - | - | - |
| | Water absorbing agent | Glycerin | parts by weight | 0.5 | 0.5 | 0.5 | 0.5 | 0.5 | 0.5 | 0.5 |
| | | Polyethylene glycol | parts by weight | - | - | - | - | - | - | - |
| Crystallization temperature Tc | | | °C | 109 | 120 | 110 | 109 | 115 | 120 | 115 |
| High-temperature-side crystal melting peak | | | °C | 148 | 148 | 145 | 148 | 148 | 162 | 148 |

EP 3 381 976 B1

| | | | | | | | | | | | |
|---|---|---|---|---|---|---|---|---|---|---|---|
| | | temperature Tmh | | | | | | | | | |
| Expanded particles of polypropylene resin (Z) | Expansion conditions | Expansion temperature | °C | 151 | 151 | 147 | 150 | 153 | 166 | 150 |
| | | Foaming agent | - | $CO_2$ | $CO_2$ | $CO_2$ | $CO_2$ | $CO_2$ | $CO_2$ | $CO_2$ |
| | | Expansion pressure (gage pressure) | MPa | 3.0 | 3.0 | 3.0 | 3.0 | 2.2 | 3.0 | 5.0 |
| | | Foaming atmosphere temperature | °C | 103 | 103 | 103 | 103 | 103 | 103 | 103 |
| | Expanded particles | First-step expansion ratio (true ratio) | times | 30 | 26 | 28 | 32 | 18 | 30 | 44 |
| | | Second-step expansion ratio (true ratio) | times | - | - | - | - | 26 | - | - |
| | | Closed cell ratio | % | 98 | 92 | 98 | 99 | 98 | 95 | 85 |
| | | Percentage of wrinkle-induced shrinkage | % | 12.4 | 1.2 | 11.0 | 7.8 | 0.7 | 3.0 | 25.0 |
| | In-mold expanded molded product | Density | g/L | 23 | 27 | 25 | 22 | 37 | In-mold expanded product not obtained | 14 |
| | | Slope "a" of reference line in Fig. 3 × 1000 | MPa/(g/L) | 9.53 | 9.80 | 8.28 | 9.36 | 9.58 | | 9.58 |
| | | Compressive strength | - | Unacceptable | Acceptable | Unacceptable | Unacceptable | Unacceptable | | Unacceptable |
| | | Fusibility (0.32 MPa) | - | Good | Poor | Good | Average | Good | | Good |
| | | Surface smoothness | - | Good | Poor | Good | Good | Good | | Poor |

Note: "Com. Ex." stands for Comparative Example.

Table 1 shows the results of evaluations of the compressive strength, fusibility, and surface smoothness of the obtained in-mold expanded molded products of Examples 1 to 9.

The results of Examples 1 to 9 indicate that expanded particles of the polypropylene resin (Z) obtained by a production method that satisfies the requirements of the present invention are capable of providing an in-mold expanded molded product with good quality including compressive strength, fusibility, and surface smoothness.

On the other hand, Table 2 shows the results of evaluations of the compressive strength, fusibility, and surface smoothness of the obtained in-mold expanded molded products of Comparative Examples 1 to 7.

In Comparative Example 1, no polyethylene resin was added. Therefore, wrinkle-induced shrinkage occurred and the obtained in-mold expanded molded product did not have a satisfactory compressive strength.

In Comparative Example 2, a large amount of the polyethylene resin A was added. Therefore, the fusibility and surface smoothness were poor, and the obtained in-mold expanded molded product was not good.

In Comparative Example 3, the melting point of the polypropylene resin B was low. Therefore, the first-step expanded particles underwent wrinkle-induced shrinkage and the obtained in-mold expanded molded product did not have a satisfactory compressive strength.

In Comparative Example 4, the polyethylene resin B having a low density was added. Therefore, the Tc was not high and wrinkle-induced shrinkage occurred. The obtained in-mold expanded molded product did not have a satisfactory compressive strength and, in addition, fusibility during molding was adversely affected.

In Comparative Example 5, second-step expanded particles having a high expansion ratio with little wrinkle-induced shrinkage were prepared through second-step expansion, and the obtained in-mold expanded molded product showed a good moldability. However, compressive strength was found to be low.

In Comparative Example 6, a resin having a Tmh above 160°C was used. Therefore, moldability in in-mold foaming molding was poor, and it was not possible to obtain a good in-mold expanded molded product. Specifically, expanded particles did not fuse together and did not keep the shape even after heating.

In Comparative Example 7, the expansion ratio was greater than 40 times. Therefore, the expanded particles of the polypropylene resin (Z) had a low closed cell ratio and also wrinkle-induced shrinkage level became worse. As a result, the obtained in-mold expanded molded product did not have a satisfactory compressive strength and, in addition, the appearance of the in-mold expanded molded product was also adversely affected.

Industrial Applicability

Expanded polypropylene resin particles produced by a method in accordance with one embodiment of the present invention can be used as a material for a lightweight, high-strength in-mold expanded molded product. The in-mold expanded molded product can be used in applications in, for example, automotive industry.

**Claims**

1. A method for producing expanded particles of a polypropylene resin (Z), the method comprising:

    a step including dispersing particles of the polypropylene resin (Z) in an aqueous dispersion medium in a pressure-resistant container, introducing a foaming agent into the pressure-resistant container, and impregnating the particles of the polypropylene resin (Z) with the foaming agent under heat and pressure, the polypropylene resin (Z) being obtained by mixing not less than 1 part by weight and not more than 10 parts by weight of a polyethylene resin (Y), which has a density of 0.945 g/cm$^3$ or greater and less than 0.980 g/cm$^3$, to 100 parts by weight of a polypropylene resin (X), the polypropylene resin (Z) having a high-temperature-side crystal melting peak temperature of 146°C or above and 160°C or below, and
    a step including releasing the particles of the polypropylene resin (Z) into a foaming atmosphere having a pressure lower than an internal pressure of the pressure-resistant container and having a foaming atmosphere temperature of 90°C or above and 105°C or below to allow the particles of the polypropylene resin (Z) to expand, thereby obtaining the expanded particles of the polypropylene resin (Z),
    the expanded particles of the polypropylene resin (Z) having an expansion ratio of 20 times or greater and 40 times or less, a closed cell ratio of 90% or greater, and a percentage of wrinkle-induced shrinkage of 5% or less, the expanded particles of the polypropylene resin (Z) being produced through a single expansion process, the percentage of wrinkle-induced shrinkage being calculated using the following equation:

$$\text{Percentage of wrinkle-induced shrinkage (\%)} = 100 \times (1 - v/v'),$$

where

v represents a volume ($cm^3$) of expanded particles submerged in ethanol, and

v' represents a volume ($cm^3$) of the expanded particles submerged in ethanol measured after placing the expanded particles in a hermetically closable pressure-resistant container and imparting an internal pressure of 0.20 MPa (absolute pressure) to the expanded particles by raising a pressure inside the hermetically closable pressure-resistant container to 0.30 MPa (gage pressure) at a rate of not more than 0.1 MPa/60 minutes; and wherein

the high-temperature-side crystal melting peak temperature is the peak at the highest temperature on a DSC curve.

2. The method according to claim 1, wherein the foaming agent contains carbon dioxide gas.

3. The method according to claim 1 or 2, wherein the polypropylene resin (Z) has a crystallization temperature higher than a crystallization temperature of the polypropylene resin (X).

4. The method according to any one of claims 1 through 3, wherein the particles of the polypropylene resin (Z) contain a water absorbing agent.

5. The method according to claim 4, wherein the water absorbing agent is polyethylene glycol and/or glycerin.

6. The method according to claim 4 or 5, wherein the water absorbing agent is contained in an amount of not less than 0.01 parts by weight and not more than 10 parts by weight with respect to 100 parts by weight of the polypropylene resin (X).

7. Expanded particles of a polypropylene resin (Z) produced by the method recited in any one of claims 1 through 6.

8. An in-mold expanded molded product which is made from expanded particles as recited in claim 7, the in-mold expanded molded product having compressive strength versus in-mold expanded molded product density which (i) is obtained when measured and plotted on a coordinate plane with the in-mold expanded molded product density on a horizontal axis and the compressive strength on a vertical axis and (ii) lies on or above an acceptance line determined by the following procedures (1) through (3):

(1) preparing samples of in-mold expanded molded products each made from expanded particles of a polypropylene resin (Z) whose base resin is the polypropylene resin (Z) and which have an expansion ratio of 10 times or greater and less than 20 times, the polypropylene resin (Z) having a high-temperature-side crystal melting peak temperature of 146°C or above 160°C or below and being obtained by mixing not less than 1 part by weight and not more than 10 parts by weight of a polyethylene resin (Y), which has a density of 0.945 $g/cm^3$ or greater and less than 0.980 $g/cm^3$, to 100 parts by weight of a polypropylene resin (X),

(2) measuring values of in-mold expanded molded product densities and compressive strengths of the samples and plotting the values on the coordinate plane as two or more points, and

(3) by using a linear approximation line as a reference line, determining, as the acceptance line, a line representing compressive strengths 3.0% below the reference line, the linear approximation line being based on the two or more points plotted in procedure (2) and passing through the origin of the coordinate plane; wherein the high-temperature-side crystal melting peak temperature is the peak at the highest temperature on a DSC curve.

9. The in-mold expanded molded product according to claim 8, which has an in-mold expanded molded product density of 15 g/L or greater and 30 g/L or less.

**Patentansprüche**

1. Ein Verfahren zur Herstellung expandierter Teilchen aus einem Polypropylenharz (Z), wobei das Verfahren umfasst:

einen Schritt, der das Dispergieren von Teilchen des Polypropylenharzes (Z) in einem wässrigen Dispersionsmedium in einem druckbeständigen Behälter, das Einbringen eines Schaumbildners in den druckbeständigen Behälter und das Imprägnieren der Teilchen des Polypropylenharzes (Z) mit dem Schaumbildner unter Hitze und Druck umfasst, wobei das Polypropylenharz (Z) durch Mischen von nicht weniger als 1 Gewichtsteil und nicht mehr als 10 Gewichtsteilen eines Polyethylenharzes (Y), das eine Dichte von 0,945 g/cm$^3$ oder mehr und weniger als 0,980 g/cm$^3$ aufweist, mit 100 Gewichtsteilen eines Polypropylenharzes (X) erhalten wird, wobei das Polypropylenharz (Z) eine hochtemperaturseitige Kristallschmelzpeaktemperatur von 146°C oder höher und 160°C oder niedriger aufweist, und

einen Schritt, der das Freisetzen der Teilchen des Polypropylenharzes (Z) in eine schäumende Atmosphäre mit einem Druck, der niedriger ist als der Innendruck des druckbeständigen Behälters, und mit einer Temperatur der schäumenden Atmosphäre von 90°C oder höher und 105°C oder niedriger umfasst, um die Teilchen des Polypropylenharzes (Z) expandieren zu lassen, wodurch die expandierten Teilchen des Polypropylenharzes (Z) erhalten werden,

wobei die expandierten Teilchen des Polypropylenharzes (Z) ein Expansionsverhältnis von 20-mal oder mehr und 40-mal oder weniger, einen Anteil von geschlossenen Zellen von 90 % oder mehr und einen Prozentsatz der falteninduzierten Schrumpfung von 5 % oder weniger aufweisen,

wobei die expandierten Teilchen des Polypropylenharzes (Z) durch ein einzelnes Expansionsverfahren hergestellt werden,

wobei der Prozentsatz der falteninduzierten Schrumpfung unter Verwendung der folgenden Gleichung errechnet wird:

$$\text{Prozentsatz der falteninduzierten Schrumpfung (\%)} = 100 \times (1 - v/v'),$$

wobei

v ein Volumen (cm$^3$) der expandierten Teilchen darstellt, die in Ethanol getaucht sind, und
v' ein Volumen (cm$^3$) von expandierten Teilchen darstellt, die in Ethanol eingetaucht sind, nachdem die expandierten Teilchen in einen hermetisch verschließbaren, druckbeständigen Behälter gegeben wurden und ein Innendruck von 0,20 MPa (Absolutdruck) auf die expandierten Teilchen ausgeübt wurde, indem ein Druck innerhalb des hermetisch verschließbaren, druckbeständigen Behälters auf 0,30 MPa (Überdruck) mit einer Rate von nicht mehr als 0,1 MPa/60 Minuten erhöht wurde; und wobei die hochtemperaturseitige Kristallschmelzpeaktemperatur der Peak bei der höchsten Temperatur auf einer DSC-Kurve ist.

2. Das Verfahren nach Anspruch 1, wobei der Schaumbildner Kohlendioxidgas enthält.

3. Das Verfahren nach Anspruch 1 oder 2, wobei das Polypropylenharz (Z) eine Kristallisationstemperatur aufweist, die höher ist als eine Kristallisationstemperatur des Polypropylenharzes (X).

4. Das Verfahren nach einem der Ansprüche 1 bis 3, wobei die Teilchen des Polypropylenharzes (Z) ein wasserabsorbierendes Mittel enthalten.

5. Das Verfahren nach Anspruch 4, wobei das wasserabsorbierende Mittel Polyethylenglycol und/oder Glycerin ist.

6. Das Verfahren nach Anspruch 4 oder 5, wobei das wasserabsorbierende Mittel in einer Menge von nicht weniger als 0,01 Gewichtsteilen und nicht mehr als 10 Gewichtsteilen, bezogen auf 100 Gewichtsteile des Polypropylenharzes (X), enthalten ist.

7. Expandierte Teilchen eines Polypropylenharzes (Z), hergestellt mit dem Verfahren nach einem der Ansprüche 1 bis 6.

8. Ein in der Form expandierter Formgegenstand, der aus expandierten Teilchen nach Anspruch 7 hergestellt ist, wobei der in der Form expandierte Formgegenstand eine Druckfestigkeit in Abhängigkeit von der Dichte des in der Form expandierten Formgegenstands aufweist, die (i) erhalten wird, wenn sie gemessen und auf einer Koordinatenebene mit der Dichte des in der Form expandierten Formgegenstands auf einer horizontalen Achse und der Druckfestigkeit auf einer vertikalen Achse aufgetragen wird, und (ii) auf oder über einer Akzeptanzlinie liegt, die durch die folgenden Verfahren (1) bis (3) bestimmt wird:

(1) Herstellung von Proben von in der Form expandierten Formgegenständen, die jeweils aus expandierten Teilchen eines Polypropylenharzes (Z) hergestellt sind, dessen Basisharz das Polypropylenharz (Z) ist und die ein Expansionsverhältnis von 10-mal oder mehr und weniger als 20-mal aufweisen, wobei das Polypropylenharz (Z) eine Hochtemperatur-Seiten-Kristallschmelzpeak-Temperatur von 146°C oder mehr und 160°C oder weniger aufweist und erhalten wird durch Mischen von nicht weniger als 1 Gewichtsteil und nicht mehr als 10 Gewichtsteilen eines Polyethylenharzes (Y), das eine Dichte von 0,945 g/cm$^3$ oder mehr und weniger als 0,980 g/cm$^3$ aufweist, mit 100 Gewichtsteilen eines Polypropylenharzes (X),

(2) Messen von Werten der Dichten und Druckfestigkeiten der in der Form expandierten Formgegenstände der Proben und Plotten der Werte auf die Koordinatenebene der Proben als zwei oder mehr Punkte, und

(3) unter Verwendung einer linearen Approximationslinie als Referenzlinie, Bestimmen einer Linie, die Kompressionsfestigkeiten von 3,0 % unter der Referenzlinie repräsentiert, als Akzeptanzlinie, wobei die lineare Approximationslinie auf den in Verfahren (2) geplotteten zwei oder mehr Punkten basiert und durch den Ursprung der Koordinatenebene verlaufen; wobei die hochtemperaturseitige Kristallschmelzpeaktemperatur der Peak bei der höchsten Temperatur auf einer DSC-Kurve ist.

9. Der in der Form expandierte Formgegenstand nach Anspruch 8, der eine in der Form expandierte Formgegenstandsdichte von 15 g/L oder mehr und 30 g/L oder weniger aufweist.

## Revendications

1. Procédé pour produire des particules expansées d'une résine de polypropylène (Z), le procédé comprenant:

une étape incluant la dispersion de particules de la résine de polypropylène (Z) dans un milieu de dispersion aqueux dans un récipient résistant à la pression, l'introduction d'un agent moussant dans le récipient résistant à la pression, et l'imprégnation des particules de la résine de polypropylène (Z) avec l'agent moussant sous la chaleur et la pression, la résine de polypropylène (Z) étant obtenue en mélangeant pas moins de 1 partie en poids et pas plus de 10 parties en poids d'une résine de polyéthylène (Y), qui a une masse volumique de 0,945 g/cm$^3$ ou plus et de moins de 0,980 g/cm$^3$, à 100 parties en poids d'une résine de polypropylène (X), la résine de polypropylène (Z) ayant une température de pic de fusion des cristaux du côté haute température de 146°C ou plus et de 160°C ou moins, et

une étape incluant la libération des particules de la résine de polypropylène (Z) dans une atmosphère de moussage ayant une pression inférieure à une pression interne du récipient résistant à la pression et ayant une température d'atmosphère de moussage de 90°C ou plus et de 105°C ou moins pour permettre aux particules de la résine de polypropylène (Z) de s'expanser, obtenant ainsi les particules expansées de la résine de polypropylène (Z),

les particules expansées de la résine de polypropylène (Z) ayant un taux d'expansion de 20 fois ou plus et 40 fois ou moins, un taux de cellules fermées de 90 % ou plus, et un pourcentage de retrait induit par les rides de 5 % ou moins,

les particules expansées de la résine de polypropylène (Z) étant produites par un seul processus d'expansion, le pourcentage de retrait induit par les rides étant calculé à l'aide de l'équation suivante:

$$\text{pourcentage de retrait induit par les rides (\%)} = 100 \times (1 - v/v'),$$

où

v représente un volume (cm$^3$) de particules expansées plongées dans l'éthanol, et

v' représente un volume (cm$^3$) des particules expansées plongées dans l'éthanol mesuré après avoir placé les particules expansées dans un récipient résistant à la pression pouvant être fermé hermétiquement et appliqué une pression interne de 0,20 MPa (pression absolue) aux particules expansées en élevant une pression à l'intérieur du récipient résistant à la pression pouvant être fermé hermétiquement à 0,30 MPa (pression manométrique) à une vitesse de pas plus de 0,1 MPa/60 minutes; et où

la température de pic de fusion des cristaux du côté haute température est le pic à la plus haute température sur une courbe de CDB.

2. Procédé selon la revendication 1, où l'agent moussant contient du gaz dioxyde de carbone.

3. Procédé selon la revendication 1 ou 2, où la résine de polypropylène (Z) a une température de cristallisation supérieure à une température de cristallisation de la résine de polypropylène (X).

4. Procédé selon l'une quelconque des revendications 1 à 3, où les particules de la résine de polypropylène (Z) contiennent un agent absorbant l'eau.

5. Procédé selon la revendication 4, où l'agent absorbant l'eau est le polyéthylèneglycol et/ou la glycérine.

6. Procédé selon la revendication 4 ou 5, où l'agent absorbant l'eau est contenu en une quantité de pas moins de 0,01 partie en poids et pas plus de 10 parties en poids pour 100 parties en poids de la résine de polypropylène (X).

7. Particules expansées d'une résine de polypropylène (Z) produites par le procédé selon l'une quelconque des revendications 1 à 6.

8. Produit moulé expansé dans le moule qui est fabriqué à partir de particules expansées selon la revendication 7, le produit moulé expansé dans le moule ayant une résistance à la compression par rapport à la masse volumique du produit moulé expansé dans le moule qui (i) est obtenue lorsqu'elle est mesurée et représentée graphiquement sur un plan de coordonnées avec la masse volumique du produit moulé expansé dans le moule sur un axe horizontal et la résistance à la compression sur un axe vertical et (ii) se situe sur ou au-dessus d'une ligne d'acceptation déterminée par les procédures (1) à (3) suivantes:

(1) préparer des échantillons de produits moulés expansés dans le moule fabriqués chacun à partir de particules expansées d'une résine de polypropylène (Z) dont la résine de base est la résine de polypropylène (Z) et qui ont un taux d'expansion de 10 fois ou plus et inférieur à 20 fois, la résine de polypropylène (Z) ayant une température de pic de fusion des cristaux du côté haute température de 146°C ou plus et 160°C ou moins et étant obtenue en mélangeant pas moins de 1 partie en poids et pas plus de 10 parties en poids d'une résine de polyéthylène (Y), qui a une masse volumique de 0,945 g/cm$^3$ ou plus et inférieure à 0,980 g/cm$^3$, à 100 parties en poids d'une résine de polypropylène (X),
(2) mesurer des valeurs de masses volumiques et de résistances à la compression de produits moulés expansés dans le moule des échantillons et représenter graphiquement les valeurs sur le plan de coordonnées sous forme de deux ou plusieurs points, et
(3) en utilisant une ligne d'approximation linéaire comme ligne de référence, déterminer, comme ligne d'acceptation, une ligne représentant des résistances à la compression 3,0 % en dessous de la ligne de référence, la ligne d'approximation linéaire étant basée sur les deux ou plusieurs points représentés graphiquement dans la procédure (2) et passant par l'origine du plan de coordonnées; où la température de pic de fusion des cristaux du côté haute température est le pic à la plus haute température sur une courbe de CDB.

9. Produit moulé expansé dans le moule selon la revendication 8, qui a une masse volumique de produit moulé expansé dans le moule de 15 g/L ou plus et de 30 g/L ou moins.

## FIG. 1

## FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009256410 A
- WO 2014136933 A
- JP 2010275499 A
- JP 2010265449 A
- WO 2009047998 A
- EP 2221337 A
- WO 201598619 A